# EUROPÄISCHE PATENTSCHRIFT

(11) **EP 2 015 947 B1**
(45) Veröffentlichungstag und Bekanntmachung des Hinweises auf die Patenterteilung: **22.12.2010**
(21) Anmeldenummer: 07723916.8
(22) Anmeldetag: 03.04.2007
(51) Int. Cl.: B60H 1/00

(54) **KRAFTFAHRZEUG-KLIMAANLAGENANORDNUNG**
MOTOR VEHICLE AIR CONDITIONING ARRANGEMENT
INSTALLATION DE CLIMATISATION POUR VEHICULE AUTOMOBILE

(30) Priorität: 28.04.2006 DE 102006020377
(43) Veröffentlichungstag der Anmeldung: 21.01.2009
(73) Patentinhaber: Behr GmbH & Co. KG, 70469 Stuttgart (DE)
(72) Erfinder: BURKHARDT, Carsten, 74653 Künzelsau (DE); GUNDEL, Holger, 70839 Gerlingen (DE); LINDAUER, Sascha, 73553 Alfdorf (DE); SCHWEIZER, Gebhard, 71229 Leonberg (DE)
(86) Internationale Anmeldenummer: PCT/EP2007/002975
(87) Internationale Veröffentlichungsnummer: WO 2007/124833

(56) Entgegenhaltungen:
- EP-A1- 1 457 366
- DE-A1- 19 534 738
- DE-A1- 19 753 877
- DE-A1- 19 858 727
- FR-A1- 2 783 465
- JP-A- 63 013 810
- US-A1- 2006 060 342

## Beschreibung

Die Erfindung betrifft eine Kraftfahrzeug-Klimaanlagenanordnung gemäß dem Oberbegriff des Anspruches 1, und wie offenbart in DE 19858727A1.

Bei herkömmlichen Kraftfahrzeug-Klimaanlagen sind üblicherweise der Heizer und der Verdampfer stehend und im Wesentlichen parallel zueinander angeordnet, um eine gute, möglichst verlustfreie Luftdurchströmung zu ermöglichen.

Ferner sind Anordnungen von Zusatzklimageräten in der Mittelkonsole oder hinter einem Radkasten bekannt. In Verbindung mit einem Klimagerät, d.h. einem Verdampfer, kann auch ein Heizer angeordnet sein. Auch in diesem Fall erfolgt die Anordnung der Komponenten im Wesentlichen aufrecht und in Richtung der Fahrzeuglängsachse.

Aus der DE 195 34 738 A1 ist eine Kraftfahrzeug-Klimaanlage bekannt, die ein versetztes Gebläse zum Blasen von Luft, einen Verdampfer, der im Armaturenbrett zentral angeordnet ist und Luft von unten empfängt, und einen Heizer aufweist, der ungefähr horizontal über dem Verdampfer angeordnet ist. Dabei verläuft der Verdampfer geneigt abwärts entlang der Richtung des Luftstroms, um ein Austragen von Kondenswasser zu ermöglichen. Der Verdampfer ist hierbei bevorzugt in einem Winkel von 10 bis 30° zur Horizontalen geneigt. Die beiden Wärmeübertrager, d.h. der Verdampfer und der Heizer, sind in unterschiedlichen Ebenen im Wesentlichen fluchtend angeordnet und der Strömungsweg der Luft durch dieselben ist, um eine möglichst kompakte Klimaanlage zu bilden, möglichst kurz gehalten.

Derartige Klimaanlagenanordnungen lassen noch Wünsche offen.

Es ist Aufgabe der Erfindung, eine verbesserte Kraftfahrzeug-Klimaanlagenanordnung zur Verfügung zu stellen.

Diese Aufgabe wird gelöst durch eine Kraftfahrzeug- Klimaanlagenanordnung mit den Merkmalen des Anspruchs 1. Vorteilhafte Ausgestaltungen sind Gegenstand der Unteransprüche.

Erfindungsgemäß ist eine Kraftfahrzeug-Klimaanlagenanordnung mit mindestens einem Heizer und mindestens einem Verdampfer vorgesehen, die in einem Luftführungsgehäuse angeordnet sind, wobei eine Schräglage von Heizer und Verdampfer vorgesehen ist, so dass die Ebenen von Verdampfer und Heizer, die senkrecht von Luft durchströmt werden, jeweils in einem Winkel von weniger als 40°, insbesondere bevorzugt von weniger als 30° und ganz besonders bevorzugt in einem Winkel von weniger als 25°, zur horizontalen Ebene, insbesondere in Einbaulage in einem Kraftfahrzeug, angeordnet sind. Gemäß einer ganz besonders bevorzugten Ausführungsform ist mindestens einer der Wärmeübertrager in einem Winkel von weniger als 20° zur horizontalen Ebene geneigt angeordnet. Bei einer derartigen, flachen Anordnung ist eine Anordnung der Klimaanlage oberhalb oder unterhalb des Fahrzeugbodens möglich.

Gemäß einer bevorzugten Ausführungsform sind die beiden Wärmeübertrager in einer Richtung geneigt.

Ebenfalls können die Wärmeübertrager auch in entgegengesetzten Richtung geneigt sein, wobei sie bevorzugt V-förmig angeordnet sind.

Vorteilhafterweise sind Heizkörper und Verdampfer so angeordnet, dass die Anströmfläche des Verdampfers und die Abströmfläche des Heizers in einem Winkel von größer als 100° und kleiner als 180°, insbesondere bevorzugt von größer als 120° und ganz besonders bevorzugt in einem Winkel von größer als 130°, angeordnet sind. Gemäß einer ganz besonders bevorzugten Ausführungsform ist die Anströmfläche des Verdampfers und die Abströmfläche des Heizers in einem Winkel von größer als 140° angeordnet.

Der Heizer ist in einem flacheren Neigungswinkel als der Verdampfer angeordnet, so dass ein ausreichend großer Bypass für die am Heizer vorbeizuleitende Luft vorgesehen werden kann.

Bevorzugt ist ein Gebläse neben dem Verdampfer und Heizer angeordnet, wobei die vom Gebläse kommende Luft vor dem Eintritt in den Verdampfer umgelenkt wird, insbesondere bevorzugt von einer Richtung entgegen der normalen Fahrtrichtung des Kraftfahrzeugs in eine Richtung senkrecht zu derselben, wobei zusätzlich noch eine Umlenkung leicht nach oben oder unten erfolgt.

Bevorzugt sind der Verdampfer und der Heizer unter einem Winkel von maximal 30° zur normalen Fahrtrichtung, besonders bevorzugt senkrecht zur normalen Fahrtrichtung des Kraftfahrzeugs von Luft durchströmbar.

Eine erfindungsgemäße Klimaanlagenanordnung ist vorzugsweise unter dem Fahrer und/oder Beifahrersitz und/oder einem Sitz der zweiten oder einer weiteren Sitzreihe und/oder unterhalb eines Fußraums und/oder im Kofferraum angeordnet.

Bevorzugt ist hierbei ein Gebläse räumlich in Höhe mit und im Kraftfahrzeug in normaler Fahrtrichtung desselben vor dem Verdampfer und Heizer angeordnet.

Insbesondere bevorzugt ist eine erfindungsgemäße Klimaanlagenanordnung teilweise unter dem Fahrer- oder Beifahrersitz und unterhalb des Fußraumes der zweiten Sitzreihe angeordnet, wobei bevorzugt das Gebläse unter dem Fahrer oder Beifahrersitz und der Verdampfer und der Heizer unterhalb eines Fußraums der zweiten Sitzreihe angeordnet sind, wodurch sich eine besonders raumsparende Anordnung der Klimaanlage ermöglicht, insbesondere für Vans bei denen im Verhältnis relativ viel Bauhöhe zur Verfügung steht.

Im Folgenden wird die Erfindung anhand eines Ausführungsbeispiels und vier allgemein beschriebenen Ausführungsformen mit Varianten unter bezugnahme auf die Zeichnung im Einzelnen erläutert. Es zeigen:
- Fig. 1: eine schematisierte, perspektivische Ansicht einer Kraft- fahrzeug-Klimaanlage gemäß dem Ausführungsbeispiel,
- Fig. 2: einen schematisierten Querschnitt durch einen Teil der Klimaanlage von Fig. 1,
- Fig. 3: einen stark schematisierten Schnitt durch eine Kraftfahr- zeug-Klimaanlage zur Verdeutlichung einer ersten Anord- nungsform von Verdampfer und Heizer, mit Darstellung des Strömungsverlaufs der Luft,
- Fig. 4: eine Variante der ersten Anordnungsform,
- Fig. 5: einen stark schematisierten Schnitt durch eine nicht beanspruchte Kraftfahr- zeug-Klimaanlage zur Verdeutlichung einer An- ordnungsform von Verdampfer und Heizer,
- Fig. 6: eine erste Variante einer zweiten Anordnungsform,
- Fig. 7: eine zweite Variante der zweiten Anordnungsform,
- Fig. 8: einen stark schematisierten Schnitt durch eine Kraftfahr- zeug-Klimaanlage zur Verdeutlichung einer dritten Anord- nungsform von Verdampfer und Heizer,
- Fig. 9: eine Variante der dritten Anordnungsform,
- Fig. 10: einen stark schematisierten Schnitt durch eine Kraftfahr- zeug-Klimaanlage zur Verdeutlichung einer vierten Anord- nungsform von Verdampfer und Heizer,
- Fig. 11: eine Variante der vierten Anordnungsform.

Eine Kraftfahrzeug-Klimaanlage 1 gemäß dem ersten Ausführungsbeispiel weist ein mehrteiliges Luftführungsgehäuse 2 auf, in welchem ein Gebläse G, welches Umluft aus dem Fahrzeuginnenraum und/oder Frischluft aus der Umgebung des Kraftfahrzeugs ansaugt, ein der Lufttemperierung dienender Verdampfer V und Heizer H angeordnet sind.

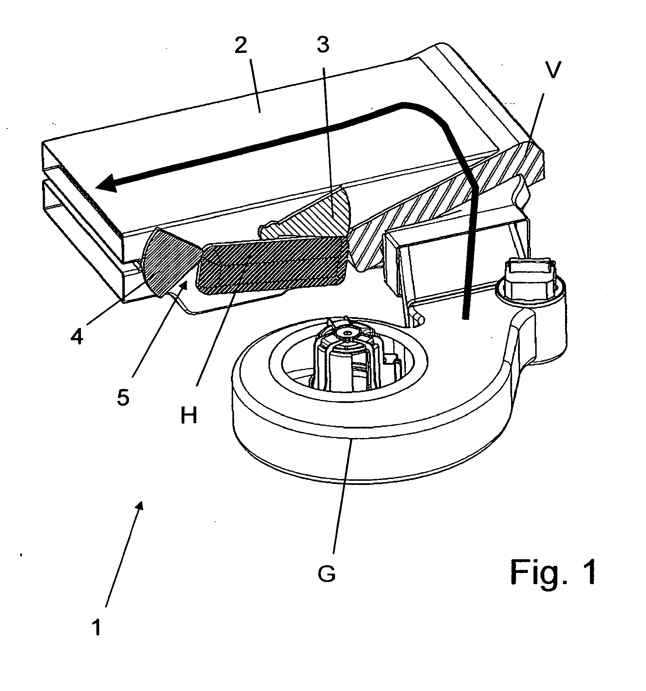

Die gesamte Klimaanlage 1 ist sehr flach ausgebildet. Hierbei ist vorliegend das Gebläse G unter dem Fahrersitz in einem Zwischenraum oberhalb des Fahrzeugbodens angeordnet, und der Verdampfer V und Heizer H sind im Fußraum der zweiten Sitzreihe angeordnet. Die Fahrtrichtung, die in Fig. 1 durch einen Pfeil angedeutet ist, verläuft im Wesentlichen senkrecht zur Luftströmungsrichtung durch den Verdampfer V und Heizer H, wobei das Gebläse G räumlich im Kraftfahrzeug vor den Wärmeübertragern H und V angeordnet ist.

In Luftströmungsrichtung gesehen ist der Verdampfer V vor dem Heizer H angeordnet, wobei die gesamte Luft den nahezu liegenden und entgegen der Luftströmungsrichtung geneigten Verdampfer V durchströmt. Der Heizer H, der in Luftströmungsrichtung geneigt ist, wird nur bei Bedarf und ggf. auch nur von einem Teilluftstrom durchströmt. Beide Wärmeübertrager H und V sind jeweils in einem Winkel von weniger als 40° zur Horizontalen geneigt, d.h. es ergibt sich eine sehr geringe Bauhöhe. Die Anströmfläche 6 des Verdampfers V und die Abströmfläche 7 des Heizers H sind dann entsprechend in einem Winkel von größer 100° angeordnet. Vorliegend ist der Verdampfer V in einem Winkel von 17° und der Heizer H in einem Winkel von 10° geneigt, damit ergibt für den Winkel zwischen der Anströmfläche 6 des Verdampfers V und die Abströmfläche 7 des Heizers ein Wert von 153°. Auf Grund der unterschiedlichen Neigungsrichtungen sind Verdampfer V und Heizer H V-förmig angeordnet, wobei das "V" weit geöffnet und auf Grund der unterschiedlichen Neigungswinkel leicht nach hinten in Luftströmungsrichtung geneigt ist.

Die Regelung der Verteilung des vom Gebläse G kommenden Luftstroms erfolgt vorliegend mittels einer einzigen, oberhalb des Heizers H angeordneten Temperaturmischklappe 3, deren Schwenkachse in der Nähe der Mitte der Oberseite etwas oberhalb derselben, vorliegend in Fahrzeuglängsrichtung verlaufend angeordnet ist, die Luftverteilung auf einzelne Luftkanäle mittels einer hinter dem Heizer H angeordneten Luftverteilungsklappe 4 deren Schwenkachse vorliegend ebenfalls in Fahrzeuglängsrichtung verläuft.

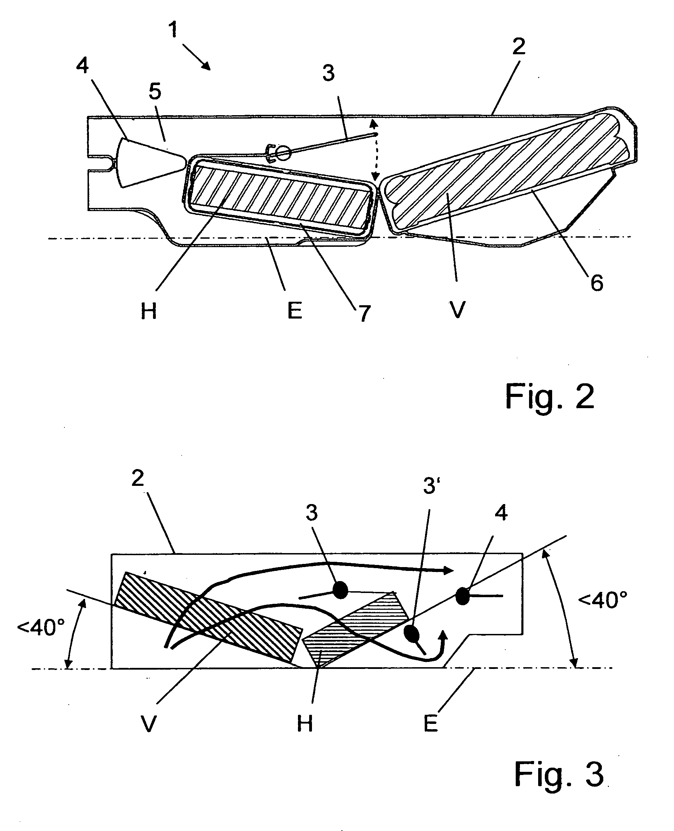

Die Schwenkachse der Temperaturmischklappe 3 liegt unterhalb der Oberkante des Verdampfers V, wie aus Fig. 2 ersichtlich ist, so dass diese Klappe die Bauhöhe nicht vergrößert. Die Schwenkachse der Luftverteilungsklappe 4 ist etwa mittig bezüglich der Bauhöhe des Verdampfers V und am oberen Eck des Heizers H angeordnet, so dass auch diese Klappe die Bauhöhe nicht beeinflusst.

Der Strömungsverlauf der Luft ausgehend vom Gebläse G erfolgt derart, dass der Luftstrom von der ursprünglichen Strömungsrichtung entgegengesetzt zur normalen Fahrtrichtung des Kraftfahrzeugs die Luft im Anströmbereich des Verdampfers V nach oben und in Richtung des Beifahrersitzes umgelenkt wird, d.h. der Verdampfer V wird von schräg unten her angeströmt, wobei sich der Luftkanal entgegen der normalen Fahrtrichtung des Kraftfahrzeugs verringert, so dass alle Bereiche des Verdampfers V möglichst gleichmäßig von Luft durchströmt werden. Nach dem Verlassen des Verdampfers V ist die Strömungsrichtung im Wesentlichen horizontal und senkrecht zur normalen Fahrtrichtung des Kraftfahrzeugs gerichtet. Je nach Klappenstellung der Temperaturmischklappe 3 wird der gesamte Luftstrom über den Heizer H hinweg geleitet (untere Endstellung der Temperaturmischklappe 3), durch den Heizer H geleitet (obere Endstellung der Temperaturmischklappe 3) oder aufgeteilt und ein der Klappenstellung entsprechender Teilluftstrom durch den Heizer H und der restliche Teilluftstrom über den Heizer H hinweg geleitet, wobei sich die Teilluftströme im nachfolgenden Mischbereich 5 mischen. Mit Hilfe der Luftverteilungsklappe 4 wird die temperierte Luft auf mehrere Luftkanäle, die zu den einzelnen Ausströmern (Mittel- und Seitendüsen (Fahrer- und Beifahrerseite), Belüftungsdüsen (Fondbereich), Ausströmer in den einzelnen Fußbereichen (Front- und Fondbereich), Defrostdüsen) führen, verteilt, wobei in der Darstellung lediglich zwei Kanäle angedeutet sind.

In Fig. 3, welche eine erste, vom ersten Ausführungsbeispiel leicht abweichende Ausführungsform der vorliegenden Erfindung zeigt, ist der Strömungsverlauf der Luft für eine Mischstellung dargestellt. Gemäß dieser ersten Ausführungsform sind Verdampfer V und Heizer H V-förmig nebeneinander angeordnet, beide in einem Winkel von jeweils weniger als 40° zur horizontalen Ebene E, wobei die benachbarten Oberkanten in etwa einer vertikalen Ebene enden, die Oberkante des Verdampfers V ist hierbei oberhalb der Oberkante des Heizers angeordnet, wobei der Neigungswinkel vorliegend jeweils auch wiederum kleiner als 30° ist. Dadurch ergibt sich zwischen der Anströmfläche 6 des Verdampfers V und der Abströmfläche 7 des Heizers H entsprechend ein Winkel von größer 120°.

Die Unterkante des Heizers H ist etwas tiefer als die Unterkante des Verdampfers V angeordnet. Zur Regelung des Luftstroms sind in dieser Ausführungsform zwei Temperaturmischklappen 3, 3' vorgesehen, wobei die erste Temperaturmischklappe 3 entsprechend der Temperaturmischklappe 3 des ersten Ausführungsbeispiels oberhalb des Heizers H mit einer Schwenkachse etwa in Höhe der oberen Kante des Heizers und im mittleren Bereich über dem Heizer H verlaufend angeordnet ist. Die zweite Temperaturmischklappe 3' ist unterhalb des Heizers H angeordnet, wobei die Schwenkachse der Klappe knapp unterhalb der luftabströmseitigen oberen Kante desselben angeordnet ist, parallel zu derjenigen der ersten Luftverteilungsklappe 3. Eine Luftverteilungsklappe 4 ist hinter einem Mischbereich 5 angeordnet.

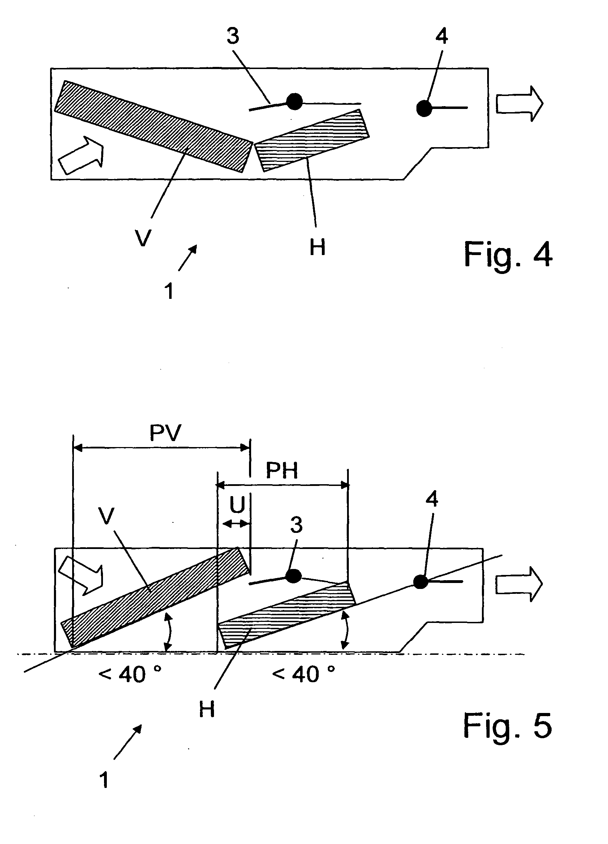

Fig. 4 zeigt eine Variante der ersten Ausführungsform, gemäß der nur eine Temperaturmischklappe 3 vorgesehen ist. Zudem enden die unteren Oberkanten von Verdampfer V und Heizer H etwa in einer Höhe, in direkter Nachbarschaft voneinander. Das zuvor beschriebene Ausführungsbeispiel entspricht daher der in Fig. 4 dargestellten Variante der ersten Ausführungsform. Auch bei dieser Variante sind die Neigungswinkel der beiden Wärmeübertrager jeweils kleiner als 40°, vorliegend auch kleiner als 30°.

Gemäß der in Fig. 5 dargestellten Ausführungsform sind die beiden Wärmeübertrager V und H jeweils mit ihren Oberkanten in Luftströmungsrichtung geneigt, wobei der Neigungswinkel wiederum jeweils kleiner als 40°, vorliegend auch wiederum kleiner als 30°, ist. Die Anströmfläche 6 des Verdampfers V und die Abströmfläche 7 des Heizers H sind vorliegend im Wesentlichen parallel angeordnet. Der obere Bereich des Verdampfers V ist vorliegend oberhalb, d.h. überlappend, bezüglich des unteren Bereichs des Heizers H angeordnet, wobei die Überlappung U, gemessen durch Projektionen der Wärmeübertrager (jeweils projizierte Anström- oder Abströmfläche des Verdampfers PV bzw. Heizer PH) auf die horizontale Ebene E, maximal einem Drittel der projizierten (gesamten) Fläche PH des Heizers H entspricht. Die untersten Kanten beider Wärmeübertrager sind vorliegend in der selben Höhe angeordnet, während die Oberkante des Verdampfers V oberhalb der des Heizers H angeordnet ist.

Zur Regelung der Temperatur ist vorliegend nur eine Temperaturmischklappe 3 vorgesehen, die oberhalb des mittleren Bereichs des Heizers H angeordnet ist, etwa in Höhe der abströmseitigen oberen Kante des Verdampfers V.

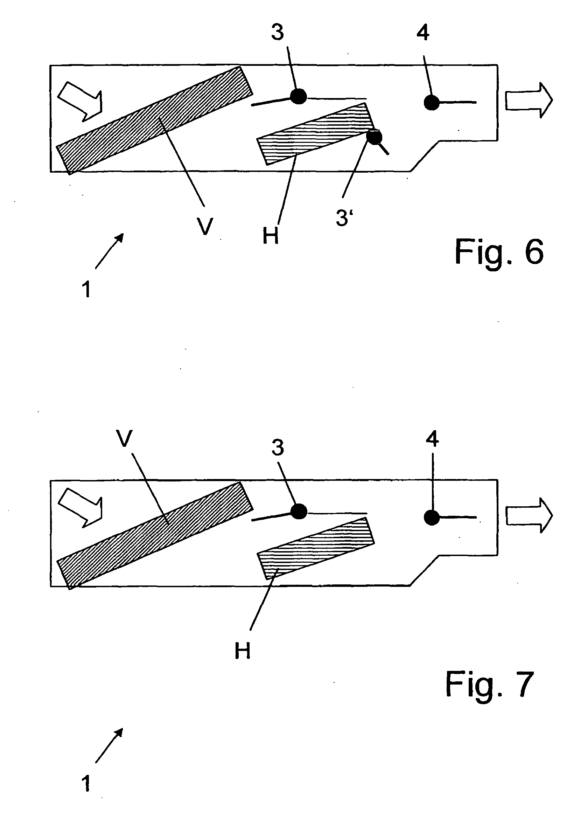

Gemäß der ersten, in Fig. 6 dargestellten Variante einer zweiten Ausführungsform ist kein Überlappen vorgesehen, d.h. die beiden Wärmeübertrager sind nebeneinander angeordnet. Die Neigungswinkel entsprechen denen der zuvor beschriebenen Ausführungsform.

Zur Regelung der Temperatur sind vorliegend zwei Temperaturmischklappen 3 und 3' vorgesehen, die erste Temperaturmischklappe 3 ist - entsprechend der zweiten Ausführungsform - oberhalb des mittleren Bereichs des Heizers H angeordnet ist, etwa in Höhe der abströmseitigen oberen Kante des Verdampfers V, die zweite Temperaturmischklappe 3' ist neben der abströmseitigen Oberkante des Heizers H angeordnet.

Die in Fig. 7 dargestellte zweite Variante der zweiten Ausführungsform entspricht der zuvor beschriebenen ersten Variante, jedoch ist nur eine Temperaturmischklappe 3 vorgesehen, nämlich wiederum diejenige, die oberhalb des Heizers H angeordnet ist.

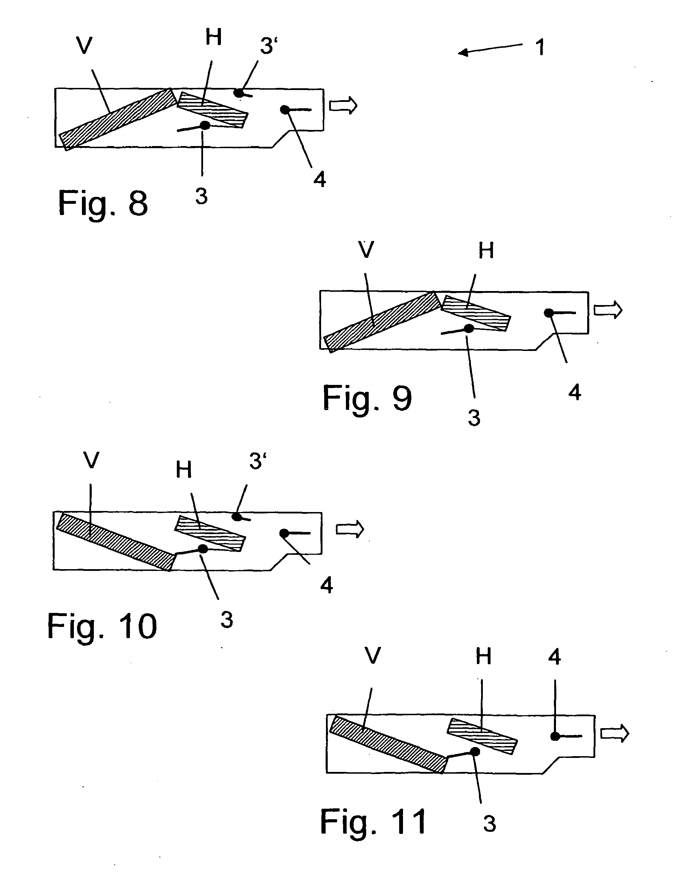

Gemäß der in Fig. 8 dargestellten dritten Ausführungsform sind die Wärmeübertrager umgekehrt V-förmig oder dachartig angeordnet, d.h. die oberen Kanten sind in direkter Nachbarschaft voneinander positioniert. Eine Überlappung ist vorliegend nicht vorgesehen. Die Oberkanten von Verdampfer V und Heizer H sind etwa in gleicher Höhe angeordnet, die Unterkanten sind jedoch in der Höhe deutlich versetzt angeordnet, wobei der Verdampfer V weiter nach unten ragt, so dass unterhalb des Heizers H ein Luftkanal verbleibt, um den Luftstrom oder Teilluftstrom am Heizer H vorbei zu leiten. Vorliegend sind zwei Temperaturmischklappen 3 und 3' vorgesehen und eine nach einem Mischbereich angeordnete Luftverteilungsklappe 4. Die Anordnung, auch in Hinblick auf die Neigungswinkel der Wärmeübertrager, entspricht im Wesentlichen der um 180° gedrehten Anordnung der ersten Ausführungsform von Fig. 3.

Fig. 9 zeigt eine Variante der dritten Ausführungsform, gemäß der die zweite Temperaturmischklappe 3' entfällt. Ansonsten entspricht der Aufbau exakt dem der dritten Ausführungsform, so dass hierauf nicht näher eingegangen wird.

Die in Fig. 10 dargestellte, vierte Ausführungsform entspricht der in Fig. 6 dargestellten ersten Variante der zweiten Ausführungsform, die um 180° gedreht ist, auch in Hinblick auf die Neigungswinkel der Wärmeübertrager. Im Falle der Variante von Fig. 11 entfällt zudem die zweite Temperaturmischklappe 3'. Gemäß einer weiteren Variante, die nicht in der Zeichnung dargestellt ist, sind der Verdampfer und der Heizer in einem Teilbereich überlappend angeordnet, d.h. entsprechend der zweiten Ausführungsform von Fig. 5. Auch in diesem Fall beträgt die Projektion der Überlappung maximal einem Drittel der Projektion des Heizers auf die horizontale Ebene.

Die Klimaanlage kann, obwohl vorstehend nicht näher beschrieben, auch mehrzonig, insbesondere zweizonig, ausgebildet sein, d.h. es sind entsprechende Trennwände und geteilte, getrennt ansteuerbare Klappen vorgesehen, um eine im Wesentlichen unabhängige Klimatisierung der einzelnen Zonen zu ermöglichen.

## Patentansprüche

1. Kraftfahrzeug-Klimaanlagenanordnung mit mindestens einem Heizer (H) und mindestens einem Verdampfer (V), die in einem Luftführungsgehäuse (2) angeordnet sind, wobei eine Schräglage von Heizer (H) und Verdampfer (V) vorgesehen ist, so dass die Ebenen von Verdampfer (V) und Heizer (H), die senkrecht von Luft durchströmt werden, jeweils in einem Winkel von weniger als 40°, insbesondere von weniger als 30°, zur horizontalen Ebene (E) in Einbaulage in einem Kraftfahrzeug angeordnet sind, **dadurch gekennzeichnet, dass** der Heizer (H) und Verdampfer (V) derart nebeneinander angeordnet sind, dass keine Überlappung der Projektionen von Verdampfer (V) und Heizer (H) auf die horizontale Ebene (E) vorgesehen ist und der Verdampfer (V) und Heizer (H) in unterschiedlichen Neigungswinkeln zur horizontalen Ebene (E) geneigt sind, wobei der Heizer (H) in einem flacheren Neigungswinkel als der Verdampfer (V) angeordnet ist.

2. Kraftfahrzeug-Klimaanlagenanordnung nach Anspruch 1, **dadurch gekennzeichnet, dass** Heizer (H) und Verdampfer (V) in gleicher Richtung geneigt sind.

3. Kraftfahrzeug-Klimaanlagenanordnung nach Anspruch 1, **dadurch gekennzeichnet, dass** Heizer (H) und Verdampfer (V) in entgegengesetzter Richtung geneigt sind.

4. Kraftfahrzeug-Klimaanlagenanordnung nach Anspruch 3, **dadurch gekennzeichnet, dass** Heizer (H) und Verdampfer (V) V-förmig angeordnet sind.

5. Kraftfahrzeug-Klimaanlagenanordnung nach einem der vorhergehenden Ansprüche, **dadurch gekennzeichnet, dass** ein Gebläse (G) neben dem Verdampfer (V) und Heizer (H) angeordnet ist, wobei die vom Gebläse (G) kommende Luft vor dem Eintritt in den Verdampfer (V) umgelenkt wird.

6. Kraftfahrzeug-Klimaanlagenanordnung nach einem der vorhergehenden Ansprüche, **dadurch gekennzeichnet, dass** der Verdampfer (V) und Heizer (H) senkrecht zur normalen Fahrtrichtung des Kraftfahrzeugs von Luft durchströmbar sind.

7. Kraftfahrzeug-Klimaanlagenanordnung nach einem der vorhergehenden Ansprüche, **dadurch gekennzeichnet, dass** die Klimaanlage (1) unter dem Fahrer und/oder Beifahrersitz und/oder einem Sitz der zweiten oder einer weiteren Sitzreihe und/oder unterhalb eines Fußraums und/oder im Kofferraum angeordnet ist.

8. Kraftfahrzeug-Klimaanlagenanordnung nach Anspruch 7, **dadurch gekennzeichnet, dass** ein Gebläse (G) räumlich in Höhe mit und im Kraftfahrzeug in normaler Fahrtrichtung desselben vor dem Verdampfer (V) und Heizer (H) angeordnet ist.

9. Kraftfahrzeug-Klimaanlagenanordnung nach Anspruch 7 oder 8, **dadurch gekennzeichnet, dass** das Gebläse (G) der Klimaanlage (1) unter dem Fahrer oder Beifahrersitz und der Verdampfer (V) und der Heizer (H) unterhalb eines Fußraums der zweiten Sitzreihe angeordnet sind.

10. Kraftfahrzeug, **gekennzeichnet durch** eine Klimaanlagenanordnung nach einem der Ansprüche 1 bis 9.

## Claims

1. A motor vehicle air conditioning system comprising at least one heating element (H) and at least one evaporator (V), which are disposed in an air guide housing (2), wherein a slanted position of the heating element (H) and evaporator (V) is provided, and therefore the planes of the evaporator (V) and the heating element (H), through which air passes perpendicularly, are each disposed at an angle of less than 40°, in particular less than 30°, relative to the horizontal plane (E) when installed in a motor vehicle, **characterized in that** the heating element (H) and the evaporator (V) are situated next to one another such that the projections of the evaporator (V) and the heating element (H) onto the horizontal plane (E) do not overlap, and the evaporator (V) and the heating element (H) are slanted at different inclination angles relative to the horizontal plane (E), wherein the heating element (H) is disposed at a flatter inclination angle than the evaporator (V).

2. The vehicle air conditioning system according to 1, **characterized in that** the heating element (H) and the evaporator (V) are slanted in the same direction.

3. The vehicle air conditioning system according to 1, **characterized in that** the heating element (H) and the evaporator (V) are slanted in opposite directions.

4. The vehicle air conditioning system according to 3, **characterized in that** the heating element (H) and the evaporator (V) are disposed in the shape of a "V".

5. The vehicle air conditioning system according to one of the preceding claims, **characterized in that** a blower (G) is disposed next to the evaporator (V) and the heating element (H), wherein the air coming from the blower (G) is deflected before it enters the evaporator (V).

6. The motor vehicle air conditioning system according to one of the preceding claims, **characterized in that** air can flow through the evaporator (V) and the heating element (H) perpendicularly to the normal direction of travel of the motor vehicle.

7. The vehicle air conditioning system according to one of the preceding claims, **characterized in that** the air conditioning system (1) is disposed underneath the driver and/or passenger seat and/or a seat in the second or a further row of seats and/or underneath a footwell and/or in the trunk.

8. The motor vehicle air conditioning system according to claim 7, **characterized in that** a blower (G) is disposed spacially at the level of the evaporator (V) and the heating element (H) and in front thereof relative to the normal direction of travel of the motor vehicle.

9. The vehicle air conditioning system according to claim 7 or 8, **characterized in that** the blower (G) of the air conditioning system (1) is disposed underneath the driver or passenger seat, and the evaporator (V) and the heating element (H) are disposed underneath a footwell of the second row of seats.

10. A motor vehicle, **characterized by** an air conditioning system according to one of the claims 1 to 9.

## Revendications

1. Agencement d'un système de climatisation d'un véhicule automobile comprenant au moins un dispositif de chauffage (H) et au moins un évaporateur (V) qui sont disposés dans un carter de guidage d'air (2), où il est prévu une position inclinée du dispositif de chauffage (H) et de l'évaporateur (V), de sorte que les plans de l'évaporateur (V) et du dispositif de chauffage (H), qui sont traversés verticalement par de l'air, sont disposés dans un véhicule automobile, en position installée, respectivement suivant un angle inférieur à 40°, en particulier inférieur à 30° par rapport au plan horizontal (E),
**caractérisé en ce que** le dispositif de chauffage (H) et l'évaporateur (V) sont disposés l'un à côté de l'autre, de manière telle qu'il ne soit prévu aucun chevauchement des projections de l'évaporateur (V) et du dispositif de chauffage (H) sur le plan horizontal (E), et l'évaporateur (V) et le dispositif de chauffage (H) sont inclinés suivant différents angles d'inclinaison par rapport au plan horizontal (E), où le dispositif de chauffage (H) est disposé suivant un angle d'inclinaison plus plat que celui de l'évaporateur (V).

2. Agencement d'un système de climatisation d'un véhicule automobile selon la revendication 1, **caractérisé en ce que** le dispositif de chauffage (H) et l'évaporateur (V) sont inclinés suivant la même direction.

3. Agencement d'un système de climatisation d'un véhicule automobile selon la revendication 1, **caractérisé en ce que** le dispositif de chauffage (H) et l'évaporateur (V) sont inclinés suivant une direction de sens opposé.

4. Agencement d'un système de climatisation d'un véhicule automobile selon la revendication 3, **caractérisé en ce que** le dispositif de chauffage (H) et l'évaporateur (V) sont disposés en forme de V.

5. Agencement d'un système de climatisation d'un véhicule automobile selon l'une quelconque des revendications précédentes, **caractérisé en ce qu'**une soufflante (G) est disposée à côté de l'évaporateur (V) et du dispositif de chauffage (H), où l'air provenant de la soufflante (G) est dévié en amont de l'entrée dans l'évaporateur (V).

6. Agencement d'un système de climatisation d'un véhicule automobile selon l'une quelconque des revendications précédentes, **caractérisé en ce que** l'évaporateur (V) et le dispositif de chauffage (H) peuvent être traversés par de l'air, perpendiculairement au sens de marche normal du véhicule automobile.

7. Agencement d'un système de climatisation d'un véhicule automobile selon l'une quelconque des revendications précédentes, **caractérisé en ce que** le système de climatisation (1) est disposé sous le conducteur et / ou sous le siège passager et / ou sous un siège de la deuxième ou d'une autre rangée de sièges et / ou au-dessous d'un espace pour les pieds et / ou dans le coffre arrière.

8. Agencement d'un système de climatisation d'un véhicule automobile selon la revendication 7, **caractérisé en ce qu'**une soufflante (G) est disposée, physiquement, à hauteur de l'évaporateur (V) et du dispositif de chauffage (H) et, dans le véhicule, dans le sens de marche normal de celui-ci, ladite soufflante est disposée en amont dudit évaporateur et dudit dispositif de chauffage.

9. Agencement d'un système de climatisation d'un véhicule automobile selon la revendication 7 ou 8, **caractérisé en ce que** la soufflante (G) du système de climatisation (1) est disposée sous le conducteur ou sous le siège du passager, et l'évaporateur (V) et le dispositif de chauffage (H) sont disposés au-dessous d'un espace pour les pieds de la deuxième rangée de sièges.

10. Véhicule automobile **caractérisé par** un agencement de système de climatisation selon l'une quelconque des revendications 1 à 9.
